# FASCICULE DE BREVET EUROPEEN

(11) **EP 2 180 583 B1**
(45) Date de publication et mention de la délivrance du brevet: **08.08.2012**
(21) Numéro de dépôt: 08018635.6
(22) Date de dépôt: 24.10.2008
(51) Int. Cl.: H02K 49/10, B01F 13/08, F04D 13/02, H02K 5/128, H02K 7/14, H02K 9/22

(54) **Appareillage à cuve d'agitation**
Gerät mit Rührbottich
Device with mixing vessel

(43) Date de publication de la demande: 28.04.2010
(73) Titulaire: BIAZZI SA, 1807 Blonay (CH)
(72) Inventeur: Hayoz, Bernard, 1804 Corsier (CH); Egloff, Serge, 1800 Vevey (CH); Mühlemann, Moritz, 1820 Territet (CH)
(74) Mandataire: Micheli & Cie SA

(56) Documents cités:
- EP-A- 0 344 532
- DE-U1- 29 505 250
- DE-U1-202006 005 189
- GB-A- 2 021 327
- US-A- 4 207 485

## Description

La présente invention concerne le domaine des appareillages à cuve d'agitation.

Un tel appareillage peut être un réacteur chimique comportant une cuve d'agitation dans laquelle se déroulent des réactions chimiques, tel qu'un réacteur sous pression ou un réacteur sous vide ou un réacteur à pression ambiante.

En particulier, il peut s'agir d'un réacteur du type utilisé pour la mise en oeuvre de réactions chimiques, telles que les réactions liquide-solide, les réactions gaz-liquide-solide, ou les réactions gaz-liquide, parmi lesquelles on peut citer l'hydrogénation, l'oxygénation, la carbonylation, l'oxydation, la chloruration, la phosgénation, etc. En chimie, les procédés qui font intervenir des réactions gaz-liquide sont extrêmement nombreux. Pour assurer le contact entre un liquide et un gaz réactif, une solution habituellement utilisée consiste à introduire le gaz réactif dans une cuve d'agitation contenant le liquide. Une agitation du liquide a pour effet de disperser le gaz sous forme de bulles. D'une manière générale, il est recherché que la taille de ces bulles de gaz soit la plus petite possible afin d'augmenter la surface de transfert entre le gaz et le liquide.

Un appareillage à cuve d'agitation peut également être un appareillage doté d'une cuve d'agitation dans laquelle ne se déroule aucune réaction chimique, comme par exemple un réservoir de préparation ayant une cuve d'agitation dans laquelle sont préparés des produits ou des mélanges de produits avant d'être mis en présence dans un réacteur, ou encore un réservoir intermédiaire ayant une cuve d'agitation dans laquelle sont stockés des produits pendant une certaine durée.

De manière classique, l'appareillage est doté d'une cuve d'agitation, et un agitateur est disposé à une extrémité inférieure d'un arbre tournant s'étendant verticalement à l'intérieur de ladite cuve d'agitation. L'arbre tournant est guidé par un palier et entraîné en rotation par un dispositif d'entraînement, disposé à l'extérieur de la cuve d'agitation dans un environnement dit « environnement d'entraînement ». La cuve d'agitation définit quant à elle un « environnement de produits ».

L'invention vise plus particulièrement un appareillage à cuve d'agitation doté d'un dispositif de refroidissement destiné à refroidir un dispositif d'entraînement de type accouplement magnétique qui entraîne en rotation l'arbre portant l'agitateur.

Il est déjà connu de faire tourner un arbre tournant d'un réacteur par un dispositif d'entraînement de type accouplement magnétique, et de refroidir celui-ci.

Le document EP 0344 532 A2 décrit un système d'entraînement pour un réacteur chimique ayant un arbre vertical portant un élément d'agitation à son extrémité inférieure. L'arbre est contenu dans un premier carter définissant un espace intérieur, et supporté en rotation axialement et radialement par deux ensembles de paliers agencés l'un au-dessus de l'autre dans le premier carter. Ce premier carter est fermé vers le haut par un deuxième carter dans lequel est logé un accouplement magnétique comportant une partie externe d'accouplement et une partie interne d'accouplement. La partie interne d'accouplement est disposée au sommet de l'arbre et rigidement liée à celui-ci. Elle est entourée par la partie externe d'accouplement, qui est montée sur un arbre moteur qui traverse le deuxième carter et relié extérieurement à un moteur d'entraînement. Sur leurs faces verticales en regard, les deux parties d'accouplement portent des aimants permanents. Entre la partie externe d'accouplement et la partie interne d'accouplement est disposé un joint statique en forme de cloche dont le bord est fixé entre les deux carters, ce qui ferme vers le haut, de manière étanche, l'espace intérieur entourant l'arbre, cet espace intérieur étant rempli d'un lubrifiant pour lubrifier les paliers de l'arbre.

Dans ce document EP 0 344 532, il est envisagé de réduire ou éliminer l'échauffement indésirable du joint d'étanchéité statique, dû aux courants de Foucault qui sont générés à l'intérieur de la cloche, lorsque ce joint d'étanchéité statique est réalisé en un matériau électriquement conducteur. A cet effet il est prévu un alésage transversal, traversant de part en part l'extrémité supérieure de la partie interne d'accouplement et communiquant en son centre avec un alésage vertical qui s'étend vers le bas dans la partie supérieure d'accouplement puis dans l'arbre, et qui communique avec un second alésage transversal ménagé dans l'arbre et débouchant dans l'espace intérieur à un niveau situé sous l'ensemble supérieur de paliers. Il est aussi prévu un canal de décharge, ménagé dans la paroi du premier carter et s'ouvrant d'une part en regard du second alésage transversal et d'autre part dans l'espace intérieur au-dessus de l'ensemble supérieur de paliers. Il est aussi prévu une turbine fixée sur l'arbre et agissant dans l'espace intérieur, entre les deux ensembles de paliers. Les alésages transversaux et verticaux ainsi que la turbine font circuler le lubrifiant dans l'espace intérieur. Il est également prévu une pluralité de canaux contenus dans la paroi du premier carter et dans lesquels circule un fluide d'évacuation de la chaleur du lubrifiant.

Les moyens de refroidissement prévus dans le système d'entraînement du document EP 0 344 532 ont pour inconvénient d'être très compliqués à mettre en oeuvre. En effet, il est nécessaire de réaliser des alésages multiples dans les parois du premier carter pour la circulation forcée du lubrifiant et pour l'échange de chaleur, et dans l'arbre lui-même pour la circulation forcée du lubrifiant. Ces opérations sont coûteuses. Il est également nécessaire de prévoir une turbine pour brasser le lubrifiant au niveau où se trouve l'échangeur de chaleur, ce qui complique encore l'installation. Un autre inconvénient de ces moyens de refroidissement réside dans le fait que la lubrification des paliers et le refroidissement des aimants permanents sont réalisés par le même fluide. Ce fluide doit donc avoir une viscosité élevée pour bien remplir sa fonction de lubrifiant, et en même temps il doit avoir une viscosité faible pour bien circuler en tant que fluide de refroidissement. Le choix du lubrifiant résulte donc d'un compromis qui favorise l'une de ces deux fonctions au détriment de l'autre. De plus, du fait que le lubrifiant remplit les deux fonctions de lubrification et de refroidissement, il résulte que le circuit de refroidissement doit être maintenu sous pression, ce qui est de réalisation compliquée.

Un autre exemple de dispositif d'entraînement du type à accouplement magnétique et dans lequel le lubrifiant rempli les deux fonctions de lubrification et de refroidissement est décrit dans le document US 4 207 485.

Un but de la présente invention est de proposer un dispositif de refroidissement du dispositif d'entraînement, qui soit de réalisation simple et peu coûteuse, et qui surmonte les inconvénients énoncés ci-dessus.

L'invention se rapporte à un appareillage à cuve d'agitation du type comportant une cuve d'agitation destinée à contenir un liquide et un agitateur destiné à tourner axialement dans ladite cuve d'agitation, la rotation dudit agitateur étant mise en veuve par un environnement d'entraînement comportant un arbre tournant entraîné par un dispositif d'entraînement, ledit dispositif d'entraînement étant de type accouplement magnétique, dans lequel ledit dispositif d'entraînement est logé à l'intérieur d'un carter et comporte une partie interne rigidement reliée à l'arbre tournant et une partie externe rigidement reliée à un arbre menant traversant le carter, ladite partie interne étant entourée par ladite partie externe, et lesdites parties interne et externe étant respectivement dotées d'aimants permanents disposés en regard les uns des autres et permettant la transmission d'un couple d'entraînement depuis l'arbre menant jusqu'à l'arbre tournant, et dans lequel une paroi de séparation est disposée entre ladite partie interne et ladite partie externe. Ladite paroi de séparation définit avec ledit carter un logement pour ladite partie externe, ledit logement étant rempli avec un fluide de transport pour transporter la chaleur, ledit fluide de transport étant en contact avec la partie externe sans être en contact avec ladite partie interne ni avec l'arbre tournant. L'appareillage comporte des moyens de circulation pour faire circuler ledit fluide de transport à l'intérieur dudit carter, et des moyens d'évacuation pour évacuer la chaleur dudit fluide de transport. L'appareillage est caractérisé en ce que lesdits moyens de circulation comportent une pluralité de trous de communication traversant ladite partie externe.

Un avantage d'un tel dispositif de refroidissement réside dans le fait que le liquide peut être choisi avec une viscosité suffisamment faible pour qu'il puisse circuler aisément. En effet, contrairement au système d'entraînement de l'art antérieur évoqué ci-dessus, le liquide de refroidissement n'a pas à remplir une fonction de lubrifiant pour les paliers de l'arbre en plus de la fonction de refroidissement des aimants permanents.

Les moyens de circulation comportent en outre des moyens de canalisation pour canaliser le fluide de transport suivant une direction axiale entre le carter et la partie externe.

Les moyens d'évacuation comportent des moyens d'échange de chaleur avec un fluide de refroidissement circulant dans un circuit séparé ou avec l'air ambiant extérieur au réacteur.

D'autres caractéristiques du dispositif de refroidissement du dispositif d'entraînement de l'arbre tournant portant l'agitateur de l'appareillage à cuve d'agitation font l'objet des revendications dépendantes annexées 2 à 7 et 9 à 14.

L'invention sera mieux comprise à la lecture de la description détaillée qui va suivre, de modes de réalisation particuliers du dispositif de refroidissement du dispositif d'entraînement de l'arbre tournant de l'appareillage à cuve d'agitation, fournis à titre illustratif et nullement limitatif, en référence aux dessins annexés, dans lesquels :
- la figure 1 est une vue en coupe longitudinale représentant, de manière schématique, un appareillage à cuve d'agitation ;
- la figure 2 est une vue en coupe longitudinale représentant un dispositif d'entraînement de l'arbre portant l'agitateur et le dispositif de refroidissement de ce dispositif d'entraînement ;
- la figure 3 est une vue en coupe longitudinale de la partie externe du dispositif d'entraînement, montrant une forme d'exécution des trous de communication ;
- les figures 4 et 5 sont analogues à la figure 3, respectivement pour deux autres formes d'exécution des trous de communication ;
- la figure 6 est une vue en coupe transversale de la partie externe du dispositif d'entraînement de la figure 4, montrant encore une forme d'exécution des trous de communication ;
- la figure 7 est une vue en coupe transversale suivant le plan VII-VII de la figure 2, montrant une forme d'exécution des moyens de canalisation ;
- la figure 8 est analogue à la figure 7, pour une forme d'exécution alternative des moyens de canalisation ;
- la figure 9 est analogue à la figure 2, montrant la forme d'exécution alternative des moyens de canalisation ainsi qu'une autre forme d'exécution des moyens d'évacuation ;
- la figure 10 est une vue en coupe transversale suivant un plan situé au-dessus du plan VII-VII de la figure 2, montrant encore une autre forme d'exécution des moyens d'évacuation.

Le mode de réalisation de l'appareillage à cuve d'agitation qui est illustré aux figures est un réacteur chimique, pour lequel la cuve d'agitation constitue une chambre de confinement contenant un milieu de réaction dans lequel se déroule(nt) une(des) réaction(s) chimique(s).

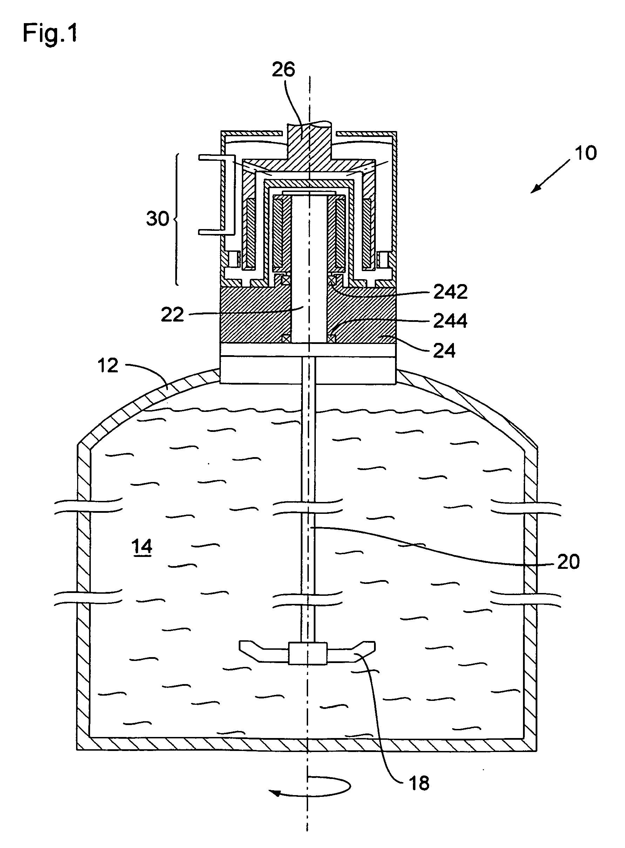

En se référant tout d'abord à la figure 1, il est représenté de manière très schématique un réacteur 10 ayant une cuve d'agitation 12 remplie d'un milieu de réaction 14. Un agitateur 18, agencé à l'extrémité d'une tige 20 disposée dans la cuve d'agitation 12, est entraîné en rotation axiale et entretient l'agitation du milieu de réaction 14.

A l'extérieur de la cuve d'agitation 12, la tige 20 est portée par un arbre tournant 22 qui lui est coaxial et qui tourne dans un palier 24. Le palier 24 est, par exemple, un palier à roulements ayant deux roulements 242, 244, qui autorise une rotation axiale de l'arbre 22 et absorbe les forces axiales et radiales s'exerçant sur l'arbre 22. L'arbre 22 est connecté à un environnement réactif. Il peut être soumis à des pressions élevées ou très faibles, ou à des températures très élevées ou très basses. L'arbre 22 est agencé verticalement et entraîné en rotation au moyen d'un arbre menant 26 actionné par exemple par un moteur, par l'intermédiaire d'un dispositif d'entraînement désigné dans son ensemble par le repère 30.

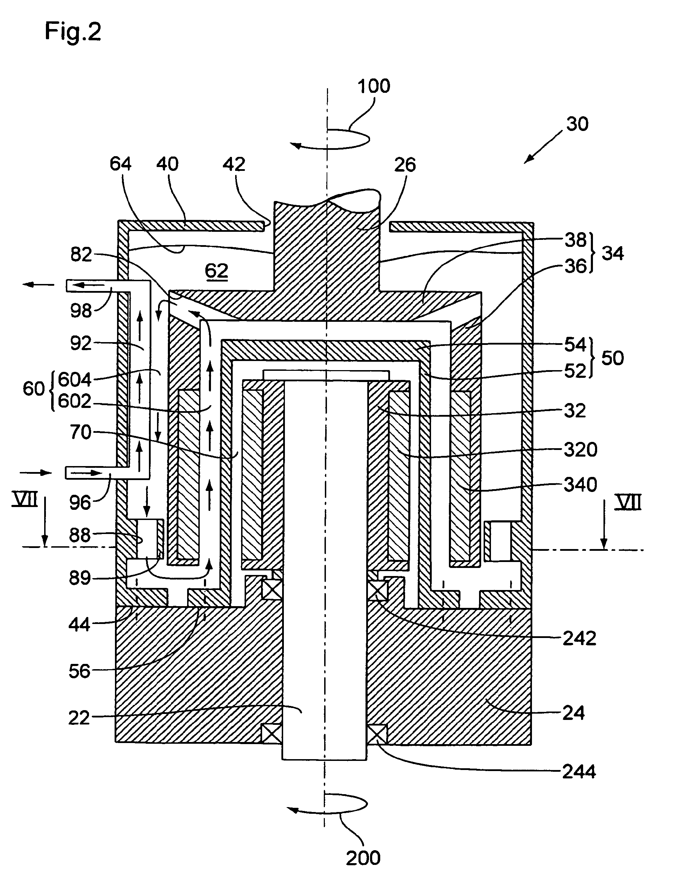

La figure 2 représente, à plus grande échelle, le dispositif d'entraînement 30 de l'arbre 22, qui est de type accouplement magnétique, et qui comporte une partie interne d'accouplement 32 et une partie externe d'accouplement 34.

La partie interne d'accouplement 32 se présente sous la forme d'un corps cylindrique ouvert aux deux extrémités, entourant la partie supérieure de l'arbre 22 et rigidement lié à celle-ci. Elle porte sur sa face extérieure des aimants permanents 320. Elle est réalisée dans un matériau comme par exemple l'acier inoxydable, ce qui permet de protéger les aimants permanents 320 contre la corrosion.

La partie externe d'accouplement 34 se présente sous la forme d'un corps cylindrique 36 ouvert à son extrémité inférieure et fermé à son extrémité supérieure par un couvercle 38 qui est rigidement lié à l'extrémité inférieure de l'arbre menant 26. Le corps 36 et le couvercle 38 de la partie externe 34 peuvent être réalisées monobloc ou être deux pièces distinctes assemblées de manière étanche. Le corps 36 de la partie externe 34 entoure la partie interne 32 et est agencé à distance de celle-ci. Il porte sur sa face intérieure des aimants permanents 340. Il est réalisé dans un matériau comme par exemple l'acier inoxydable.

Les aimants permanents 320, 340 sont disposés en regard les uns des autres et coopèrent de manière à transmettre un couple moteur depuis l'arbre menant 26 jusqu'à l'arbre 22 portant la tige 20 qui elle-même porte l'agitateur 18.

Le dispositif d'entraînement 30 est contenu à l'intérieur d'un carter 40. A sa partie supérieure, le carter 40 est doté d'une ouverture 42 traversée par l'arbre menant 26. A sa partie inférieure, le carter 40 est fixé de manière étanche sur le palier 24 (repère 44) par exemple au moyen de vis et d'un joint torique.

Une paroi de séparation 50 est disposée entre la partie interne 32 et la partie externe 34. Elle se présente sous la forme d'une pièce « en cloche » comportant une portion cylindrique 52 et une portion d'extrémité 54 qui peuvent être réalisées monobloc ou être deux pièces distinctes, ou davantage, assemblées de manière étanche. La portion cylindrique 52 est interposée entre les aimants permanents 320, 340. A son extrémité inférieure, elle est fixée de manière étanche sur le palier 24 (repère 56) par exemple au moyen de vis et d'un joint torique. La portion d'extrémité 54 ferme l'extrémité supérieure de la portion cylindrique 52 et se trouve en regard du couvercle 38 de la partie externe d'accouplement 34.

La paroi de séparation 50 sépare l'espace dédié à l'arbre tournant 22 et l'espace dédié à l'arbre menant 26, ces deux espaces pouvant être des milieux différents dans lesquels règnent des pressions différentes.

Plus généralement, la paroi de séparation 50 constitue une barrière entre deux milieux qui peuvent être soumis à des pressions différentes. Par exemple, elle constitue une barrière entre le milieu dans lequel se déroule(nt) la(les) réaction(s) chimique(s) et le milieu extérieur, ou entre un milieu en contact avec le milieu dans lequel se déroule(nt) la(les) réaction(s) chimique(s) et le milieu extérieur. Grâce à la paroi de séparation 50, des gaz ou des vapeurs provenant de la cuve d'agitation 12 sont empêchés de s'échapper vers l'extérieur, ce qui constitue une sécurité pour le réacteur lorsque la(les) réaction(s) chimique(s) met(tent) en jeu un produit potentiellement dangereux tel que l'hydrogène. De manière analogue, la présence de la paroi de séparation 50 empêche que l'oxygène de l'air pénètre dans la cuve d'agitation 12 et réagisse avec les produits de réaction qui s'y trouvent.

La paroi de séparation 50 est réalisée dans un matériau présentant une capacité optimale à transmettre le flux magnétique et à maintenir la pression qui règne en son sein. Ce matériau peut être un alliage approprié tel qu'un acier inoxydable, comme par exemple l'alliage connu sous la marque déposée Hastelloy.

Lorsque l'arbre menant 26 est mis en rotation axiale, comme indiqué par la flèche 100, il entraîne avec lui la partie externe d'accouplement 34 dont le corps 36 porte les aimants permanents 340. Ceux-ci coopèrent avec les aimants permanents 320 portés par la partie interne d'accouplement 32 qui est alors mise en rotation et entraîne à son tour en rotation l'arbre 22, comme indiqué par la flèche 200. L'interaction entre les aimants permanents 320 de la partie interne 32 et les aimants permanents 340 de la partie externe 34 crée des courants de Foucault qui génèrent un échauffement de la paroi de séparation 50, et notamment de sa portion cylindrique 52.

Un échauffement excessif de la paroi de séparation 50 peut avoir pour conséquence non souhaitée une réduction de la résistance mécanique de l'acier constitutif de celle-ci, et une démagnétisation des aimants permanents 320, 340.

Le carter 40 et la paroi de séparation 50 définissent un logement 60 dans lequel est contenue la partie externe d'accouplement 34. Ce logement 60 est rempli d'un fluide de transport de chaleur 62 jusqu'à un niveau 64 qui est situé au-dessus du couvercle 38 de la partie externe 34. Le fluide de transport 62 est par exemple de l'eau ou de l'eau glycolée. Le logement 60 comporte un compartiment interne 602, situé entre la partie externe 34 et la paroi de séparation 50, et un compartiment externe 604 situé entre la partie externe 34 et le carter 40, les deux compartiments 602, 604 étant en communication. Le logement 60 peut être doté d'équipements usuels disposés par exemple sur le carter 40, parmi lesquels une vanne de trop-plein, une tubulure de remplissage, un dispositif de dégagement d'une pression accidentellement trop élevée, des instruments de mesure de la pression et/ou de la température et/ou du niveau.

Le fluide de transport 62 est mis en circulation dans le logement 60 par des moyens de circulation, de manière à transporter la chaleur depuis le compartiment interne 602 vers le compartiment externe 604. La chaleur est ensuite évacuée vers l'extérieur du carter 40 par des moyens d'évacuation.

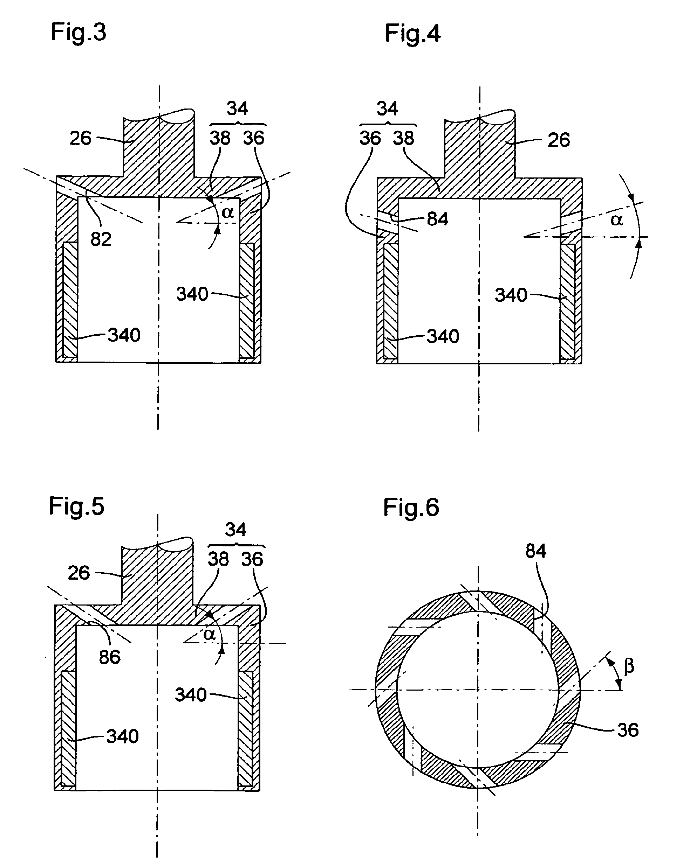

Des premiers moyens de circulation sont illustrés plus en détail aux figures 3 à 6. Ils comportent une pluralité de trous de communication 82, 84, 86 traversant la partie externe 34, qui réalisent une communication entre le compartiment interne 602 et le compartiment externe 604 du logement 60. De préférence, ces trous de communication 82, 84, 86 sont agencés au-dessus des aimants permanents 340 de la partie externe 34.

Selon une forme d'exécution illustrée aux figures 2 et 3, lesdits trous de communication 82 sont disposés à travers la jonction entre le corps 36 et le couvercle 38 de ladite partie externe 34. Selon une autre forme d'exécution illustrée à la figure 4, lesdits trous de communication 84 sont disposés à travers le corps 36 de ladite partie externe 34. Selon encore une autre forme d'exécution illustrée à la figure 5, lesdits trous de communication 86 sont disposés à travers le couvercle 38 de ladite partie externe 34.

D'autres formes d'exécution (non représentées) consistent en des combinaisons des formes d'exécution ci-dessus. Une forme d'exécution combinée comporte une série de trous de communication 82 et une série de trous de communication 84. Une autre forme d'exécution combinée comporte une série de trous de communication 82 et une série de trous de communication 86. Une autre forme d'exécution combinée comporte une série de trous de communication 84 et une série de trous de communication 86. Une autre forme d'exécution combinée comporte une série de trous de communication 82, une série de trous de communication 84 et une série de trous de communication 86.

Les trous de communication 82, 84, 86 peuvent avoir des directions rectilignes, comme indiqué sur les figures 3 à 6, ou des directions incurvées. Ils peuvent présenter des dimensions variables correspondant au volume de liquide de refroidissement 62 utilisé, c'est-à-dire aux dimensions du logement 60. Ils peuvent présenter des sections de formes variables : circulaires, elliptiques, quadrangulaires, etc.

Le nombre de trous de communication 82 et/ou 84 et/ou 86 dépend des dimensions de la partie externe 34 et des dimensions desdits trous de communication 82, 84, 86. Par exemple, il peut être prévu deux trous de communication ou davantage.

Les trous de communication 82, 84, 86 peuvent être orientés suivant une direction horizontale ou peuvent être inclinés d'un angle α par rapport à un plan horizontal, l'une de leurs extrémités débouchant dans le compartiment interne 602 et leur autre extrémité débouchant dans le compartiment externe 604 (voir figures 3, 4, 5). Pour les trous de communication 82 situés sur la jonction entre le corps 36 et le couvercle 38, l'angle α est de manière préférée compris entre 0° et 60°, de manière plus préférée entre 0° et 30°, de manière encore plus préférée l'angle α est sensiblement égal à 15. Pour les trous de communication 84 situés sur le corps 36, l'angle α est de manière préférée compris entre -60° et 60°, de manière plus préférée entre -30° et 30°, de manière encore plus préférée l'angle α est sensiblement égal à 0°. Pour les trous de communication 86 situés sur le couvercle 38, l'angle α est de manière préférée compris entre 30° et 60°, de manière plus préférée entre 30° et 45°, de manière encore plus préférée l'angle α est sensiblement égal à 30°.

Les trous de communication 82, 84, 86 peuvent être orientés suivant une direction radiale ou suivant une direction qui fait un angle β avec une direction radiale (voir figure 6). De manière préférée, l'angle β est compris entre 60° et -60°. De manière plus préférée, l'angle β est compris entre 45° et -45°. De manière encore plus préférée l'angle β est sensiblement égal à 0°.

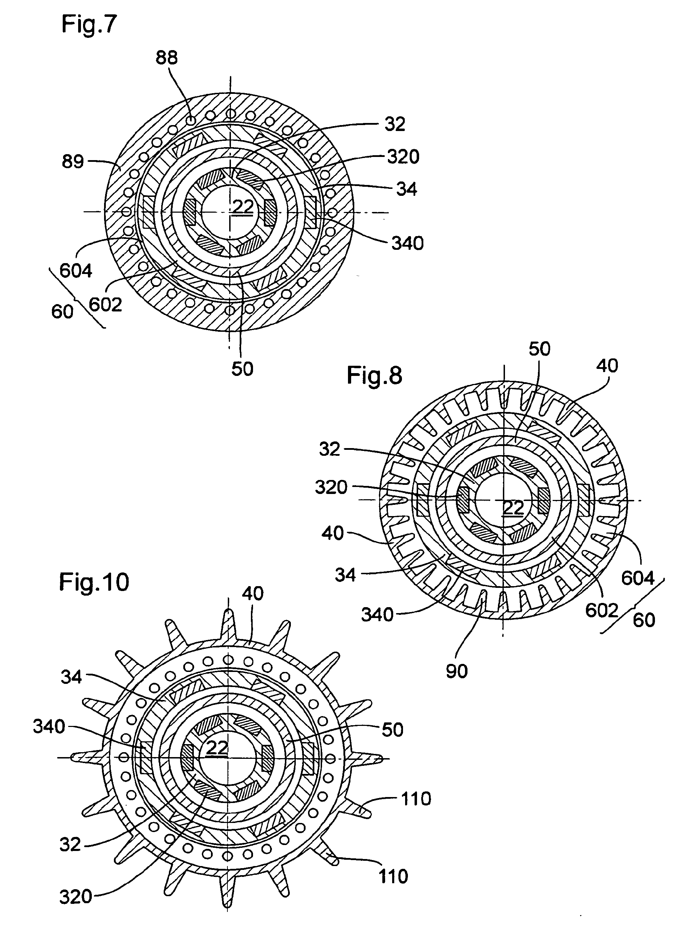

Des deuxièmes moyens de circulation apparaissent sur les figures 7 à 10. Ils comportent des moyens de canalisation 88, 90, situés dans le logement 60, qui ont pour rôle de canaliser le fluide de transport 62 suivant une direction parallèle à la direction de l'arbre 22, et permettent d'éviter une rotation du fluide de transport 62 autour de la direction de l'arbre 22. Sur les exemples illustrés, les moyens de canalisation 88 ou 90 sont situés dans le compartiment externe 604. De préférence, ils sont disposés suivant une répartition circonférentielle régulière. De manière préférée, ils sont disposés vers le bas du logement 60.

Selon une forme de réalisation illustrée aux figures 2 et 7, les moyens de canalisation sont constitués par des trous de passage 88 ménagés dans une portion en saillie 89 qui s'étend à partir de la face intérieure du carter 40 dans le compartiment externe 604 du logement 60. Ces trous de passage 88 présentent un diamètre suffisamment grand pour minimiser une perte de pression. De plus, la distance entre la portion en saillie 89 et la partie extérieure 34 est choisie suffisamment faible pour contraindre la plus grande partie du fluide de transport à passer par les trous de passage 88.

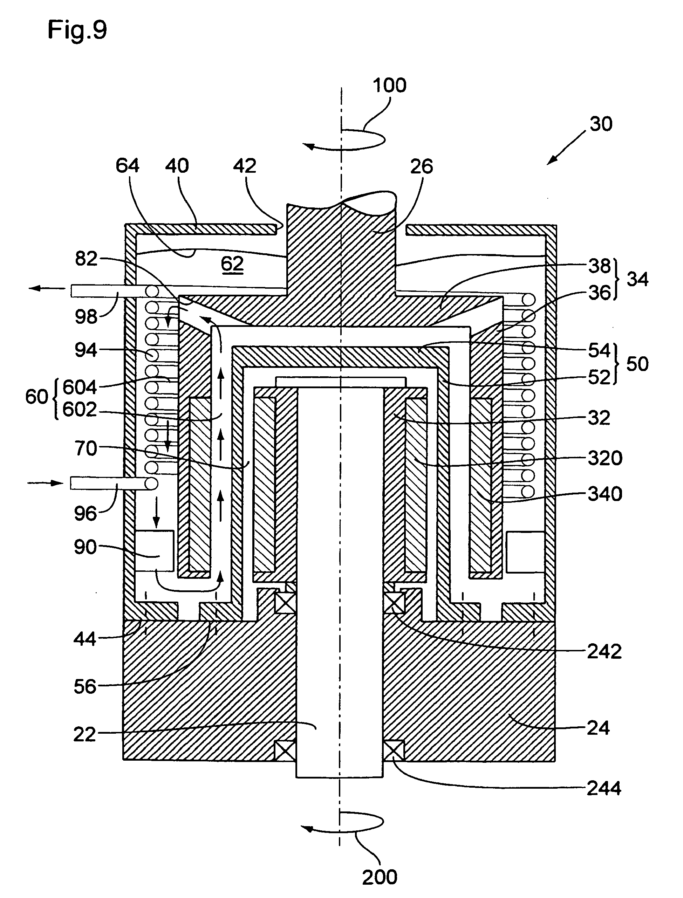

Selon une autre forme de réalisation, illustrée aux figures 8 et 9, les moyens de canalisation sont constitués par une pluralité d'ailettes 90 qui s'étendent dans le compartiment externe 604 à partir de la face intérieure du carter 40. De plus, la distance entre les ailettes 90 et la partie extérieure 34 est choisie suffisamment faible pour contraindre la plus grande partie du fluide de transport à passer entre lesdites ailettes 90.

Les moyens d'évacuation de la chaleur 92, 96, 98, 94, 110 apparaissent sur les figures 1, 2 et 9. Ils comportent des moyens constitutifs d'un échangeur de chaleur.

Sur l'exemple illustré aux figures 1 et 2, les moyens d'évacuation comportent une chemise 92 disposée dans le compartiment extérieur 604 et immergée dans le fluide de transport 62. De préférence, la chemise 92 est accolée à la face intérieure du carter 40. Sur l'exemple illustré à la figure 2, la chemise 92 est accolée à une partie seulement de cette face intérieure. Elle pourrait, en variante, être plus longue et s'étendre le long de toute la circonférence intérieure du carter 40. La chemise 92 est reliée à une source extérieure (non représentée) d'un fluide de refroidissement dont la température est maintenue inférieure à la température souhaitée dans le logement 60. Le fluide de refroidissement est mis en circulation dans la chemise 92 au moyen d'au moins un conduit d'entrée 96 et d'au moins un conduit de sortie 98. La chemise 92 évacue la chaleur du fluide de transport 62 vers le fluide de refroidissement à travers sa paroi, et agit ainsi comme un échangeur de chaleur. Sur la figure 2, le fluide de transport et le fluide de refroidissement circulent dans des sens opposés, mais ils pourraient circuler dans le même sens.

Selon une autre forme d'exécution représentée à la figure 9, les moyens d'évacuation comportent un serpentin 94 disposé autour de la partie externe 34 et relié par un conduit d'entrée 96 et un conduit de sortie 98 à une source extérieure (non représentée) d'un fluide de refroidissement dont la température est maintenue inférieure à la température souhaitée dans le logement 60.

Le fluide de refroidissement circulant dans la chemise 92 ou dans le serpentin 94 n'entre pas en contact avec les aimants 320, 340, ce qui présente pour avantage, par rapport à des appareillages dans lesquels des aimants sont en contact direct avec un fluide de refroidissement, qu'il n'est pas nécessaire d'utiliser comme fluide de refroidissement un fluide compatible avec des applications magnétiques. Par exemple, le fluide de refroidissement peut contenir des particules métalliques sans que cela nuise au fonctionnement du dispositif de refroidissement ni au fonctionnement de l'appareillage à cuve d'agitation 10 dans son ensemble. En outre, le fluide de refroidissement peut être réutilisé.

Le fluide de refroidissement circulant dans la chemise 92 ou dans le serpentin 94 peut être un fluide sous pression, ce qui présente des avantages.

Un premier avantage réside dans le fait qu'il n'est pas nécessaire de prévoir une conception particulière du carter 40. En effet, si un fluide de refroidissement sous pression était directement injecté dans le logement 60, il serait nécessaire que la conception du carter 40 soit conforme à des normes contraignantes propres aux récipients sous pression.

Un deuxième avantage réside dans le fait que le débit de fluide de refroidissement peut être supérieur au débit d'un fluide de refroidissement qui serait directement en contact avec les aimants permanents, ce qui procure un meilleur refroidissement.

Selon une autre forme d'exécution représentée à la figure 10, les moyens d'évacuation comportent une pluralité d'ailettes 110 s'étendent à partir de la face extérieure du carter 40. Sur l'exemple illustré, les ailettes 110 s'étendent suivant un plan radial. En variante, elles pourraient s'étendre suivant un plan faisant un angle avec le plan radial et/ou avoir une forme incurvée. La chaleur du fluide de transport 62 est évacuée à travers le carter 40 au moyen des ailettes 110 par convection avec l'air ambiant. Avec cette forme de réalisation des moyens d'évacuation, il n'est pas nécessaire de prévoir une liaison avec une source extérieure de fluide de refroidissement comme c'est le cas avec les formes d'exécution illustrées aux figures 2 et 9.

On va maintenant décrire la circulation du fluide de transport 62, en référence à la figure 2.

La rotation axiale de l'arbre 22, désignée par le repère 100, crée une force centrifuge qui met le fluide de transport en circulation entre le compartiment interne 602 et le compartiment externe 604, par les trous de communication 82 qui fonctionnent à la manière d'une pompe.

Le fluide de transport 62 circule vers le haut dans le compartiment interne 602 et vers le bas dans le compartiment externe 604. Après avoir été échauffé par son passage le long de la paroi de séparation 50, il est pompé par les trous de communication 82 et passe du compartiment intérieur 602 au compartiment extérieur 604 en partie haute du logement 60. Puis il est refroidi par échange de chaleur par l'intermédiaire des moyens d'évacuation 92, 94 ou 110. Puis il est canalisé par les trous de passage 88 et passe du compartiment extérieur 604 au compartiment intérieur 602 en partie basse du logement 60. Puis il circule à nouveau dans la zone du compartiment intérieur 602 située entre la paroi de séparation 50 et les aimants 340 de la partie externe 34, où il va être à nouveau échauffé puis pompé.

La description précédente de la circulation du fluide de transport 62 s'applique lorsque les trous de communication 82 (figures 2 et 3) sont remplacés par des trous de communication 84 (figure 4) ou par des trous de communication 86 (figure 5) ou par une combinaison de ceux-ci.

La description précédente de la circulation du fluide de transport 62 s'applique lorsque les moyens de canalisation ne sont pas des trous de passage 88, mais sont des ailettes 90 (figure 9).

Les figures 2 et 7 à 10 montrent qu'un deuxième logement 70 est défini entre l'arbre tournant 22 portant la partie interne 32 et la paroi de séparation 50. Le logement 70 peut communiquer avec l'intérieur du palier 24. Dans ce cas, il peut être rempli d'un lubrifiant. En variante, il peut être rempli de gaz, par exemple de l'air ou de l'hydrogène, selon le type de réaction chimique qui est mis en oeuvre dans le réacteur 10.

La paroi de séparation 50 réalise une séparation étanche entre les deux logements 60 et 70, ce qui a pour avantage que le fluide de transport 62 utilisé pour refroidir la paroi de séparation 50 n'a pas à remplir une fonction supplémentaire telle que par exemple une fonction de lubrification.

Bien entendu, l'invention n'est pas limitée aux modes de réalisations qui ont été illustrés aux figures et couvre des variantes de réalisation à la portée de l'homme du métier.

En outre, un dispositif analogue au dispositif de refroidissement qui vient d'être décrit pourrait être utilisé, dans des conditions climatiques de températures extrêmement basses (par exemple de l'ordre de -30°C à -50°C), pour réchauffer le dispositif d'entraînement de l'arbre du réacteur. Il suffit alors de remplacer la source de fluide de refroidissement par une source de fluide de réchauffement à une température adéquate.

## Revendications

1. Appareillage à cuve d'agitation (10) du type comportant une cuve d'agitation (12) destinée à contenir un liquide et un agitateur (18) destiné à tourner axialement dans ladite cuve d'agitation (12), la rotation dudit agitateur (18) étant mise en oeuvre par un environnement d'entraînement comportant un arbre tournant (22) entraîné par un dispositif d'entraînement (30), ledit dispositif d'entraînement étant de type accouplement magnétique,
dans lequel ledit dispositif d'entraînement (30) est logé à l'intérieur d'un carter (40) et comporte une partie interne (32) rigidement reliée à l'arbre tournant (22) et une partie externe (34) rigidement reliée à un arbre menant (26) traversant ledit carter (40), ladite partie interne (32) étant entourée par ladite partie externe (34), et lesdites parties interne (32) et externe (34) étant respectivement dotées d'aimants permanents (320, 340) disposés en regard les uns des autres et permettant la transmission d'un couple d'entraînement depuis l'arbre menant (26) jusqu'à l'arbre tournant (22), et
dans lequel une paroi de séparation (50) est disposée entre ladite partie interne (32) et ladite partie externe (34),
dans lequel ladite paroi de séparation (50) définit avec ledit carter (40) un logement (60) pour ladite partie externe (34), ledit logement (60) comportant un compartiment interne (602), situé entre la partie externe (34) et la paroi de séparation (50), et un compartiment externe, situé entre la partie externe (34) et le carter (40), et étant rempli avec un fluide de transport (62) pour transporter la chaleur, ledit fluide de transport (62) étant en contact avec la partie externe (34) sans être en contact avec la partie interne (32) ni avec l'arbre tournant (22),
l'appareillage comportant encore des moyens de circulation (82, 84, 86, 88, 90) pour faire circuler ledit fluide de transport (62) à l'intérieur dudit carter (40) et des moyens d'évacuation (92, 94, 110) pour évacuer la chaleur dudit fluide de transport (62),
**caractérisé en ce que** lesdits moyens de circulation (82, 84, 86, 88, 90) comportent une pluralité de trous de communication (82, 84, 86), traversant ladite partie externe (34) de manière à transporter la chaleur depuis le compartiment interne (602) vers le compartiment externe (604).

2. Appareillage à cuve d'agitation (10) selon la revendication 1, dans lequel lesdits trous de communication (82, 84, 86) sont agencés au-dessus des aimants permanents (340) de ladite partie externe (34).

3. Appareillage à cuve d'agitation (10) selon la revendication 1 ou 2, dans lequel lesdits trous de communication (82) sont disposés à travers la jonction entre un corps cylindrique (36) et un couvercle (38) de ladite partie externe (34).

4. Appareillage à cuve d'agitation (10) selon l'une quelconque des revendications 1 à 3, dans lequel lesdits trous de communication (84) sont disposés à travers un corps cylindrique (36) de ladite partie externe (34).

5. Appareillage à cuve d'agitation (10) selon l'une quelconque des revendications 1 à 4, dans lequel lesdits trous de communication (86) sont disposés à travers un couvercle (38) de ladite partie externe (34).

6. Appareillage à cuve d'agitation (10) selon l'une quelconque des revendications 1 à 5, dans lequel lesdits trous de communication (82, 84, 86) sont inclinés par rapport à un plan horizontal, l'une de leurs extrémités débouchant du côté intérieur de la partie externe (34), et leur autre extrémité débouchant du côté extérieur de ladite partie externe (34).

7. Appareillage à cuve d'agitation (10) selon l'une quelconque des revendications 1 à 6, dans lequel lesdits trous de communication (82, 84, 86) sont inclinés par rapport à un plan radial de ladite partie externe (34).

8. Appareillage à cuve d'agitation (10) selon l'une quelconque des revendications 1 à7, dans lequel les moyens de circulation (82, 84, 86, 88, 90) comportent des moyens de canalisation (88, 90) pour canaliser le fluide de transport (62) suivant une direction axiale entre le carter (40) et la partie externe (34).

9. Appareillage à cuve d'agitation (10) selon la revendication 8, dans lequel lesdits moyens de canalisation (88, 90) sont disposés vers le bas du logement.

10. Appareillage à cuve d'agitation (10) selon la revendication 8 ou 9, dans lequel lesdits moyens de canalisation (88, 90) comportent une pluralité de trous de passage (88) ménagés dans au moins une portion en saillie (89) qui s'étend à partir de la face intérieure du carter (40).

11. Appareillage à cuve d'agitation (10) selon la revendication 8 ou 9, dans lequel lesdits moyens de banalisation (88, 90) comportent une pluralité d'ailettes (90) qui s'étendent à partir de la face intérieure du carter (40).

12. Appareillage à cuve d'agitation (10) selon l'une quelconque des revendications 1 à 11, dans lequel les moyens d'évacuation (92, 94, 110) comportent une chemise (92) disposée entre le carter (40) et la partie externe (34) et immergée dans ledit fluide de transport (62), ladite chemise (92) étant reliée à une source extérieure d'un fluide de refroidissement qui circule dans ladite chemise (92) et qui évacue la chaleur du fluide de transport (62) à travers la paroi de ladite chemise (92).

13. Appareillage à cuve d'agitation (10) selon l'une quelconque des revendications 1 à 11, dans lequel les moyens d'évacuation (92, 94, 110) comportent un serpentin (94) disposé entre le carter (40) et la partie externe (34) et immergé dans ledit fluide de transport (62), ledit serpentin (94) étant relié à une source extérieure d'un fluide de refroidissement qui circule dans ledit serpentin (94) et qui évacue la chaleur du fluide de transport (62) à travers la paroi dudit serpentin (94).

14. Appareillage à cuve d'agitation (10) selon l'une quelconque des revendications 1 à 11, dans lequel les moyens d'évacuation (92, 94, 110) comportent une pluralité d'ailettes (110) s'étendent à partir de la face extérieure du carter (40) et permettant un échange de chaleur par convection avec l'air ambiant.

## Claims

1. Apparatus (10) having a mixing vessel, of the type comprising a mixing vessel (12) intended to contain a liquid and a mixer (18) intended to rotate axially in said mixing vessel (12), the rotation of said mixer (18) being implemented by a drive environment having a rotating shaft (22) driven by a drive device (30), said drive device being of the magnetic coupling type,
wherein said drive device (30) is housed within a casing (40) and has an inner part (32) fixedly connected to the rotating shaft (22) and an outer part (34) fixedly connected to a driving shaft (26) passing through said casing (40), said inner part (32) being surrounded by said outer part (34), and said inner (32) and outer (34) parts being respectively provided with permanent magnets (320, 340) disposed opposite each other and allowing the transmission of a drive torque from the driving shaft (26) to the rotating shaft (22), and
wherein a partition wall (50) is disposed between said inner part (32) and said outer part (34),
wherein said partition wall (50) defines, with said casing (40), a housing (60) for said outer part (34), said housing (60) comprising an inner compartment (602) located between the outer part (34) and the partition wall (50) and an outer compartment located between the outer part (34) and the casing (40), and being filled with a transport fluid (62) for transporting heat, said transport fluid (62) being in contact with the outer part (34) without being in contact with the inner part (32) or the rotating shaft (22),
the apparatus further comprising circulation means (82, 84, 86, 88, 90) for circulating said transport fluid (62) within said casing (40) and discharge means (92, 94, 110) for discharging the heat from said transport fluid (62), **characterised in that** said circulation means (82, 84, 86, 88, 90) have a plurality of communication holes (82, 84, 86) passing through said outer part (34) so as to transport the heat from the inner compartment (602) to the outer compartment (604).

2. Apparatus (10) having a mixing vessel as claimed in Claim 1, wherein said communication holes (82, 84, 86) are arranged above permanent magnets (340) of said outer part (34).

3. Apparatus (10) having a mixing vessel as claimed in Claim 1 or 2, wherein said communication holes (82) are disposed through the junction between a cylindrical body (36) and a cover (38) of said outer part (34).

4. Apparatus (10) having a mixing vessel as claimed in any one of Claims 1 to 3, wherein said communication holes (84) are disposed through a cylindrical body (36) of said outer part (34).

5. Apparatus (10) having a mixing vessel as claimed in any one of Claims 1 to 4, wherein said communication holes (86) are disposed through a cover (38) of said outer part (34).

6. Apparatus (10) having a mixing vessel as claimed in any one of Claims 1 to 5, wherein said communication holes (82, 84, 86) are inclined with respect to a horizontal plane, one of the ends thereof issuing out of the inner side of the outer part (34) and the other end thereof issuing out of the outer side of said outer part (34).

7. Apparatus (10) having a mixing vessel as claimed in any one of Claims 1 to 6, wherein said communication holes (82, 84, 86) are inclined with respect to a radial plane of said outer part (34).

8. Apparatus (10) having a mixing vessel as claimed in any one of Claims 1 to 7, wherein the circulation means (82, 84, 86, 88, 90) comprise channel means (88, 90) for channelling the transport fluid (62) in an axial direction between the casing (40) and the outer part (34).

9. Apparatus (10) having a mixing vessel as claimed in Claim 8, wherein said channel means (88, 90) are disposed towards the bottom of the housing.

10. Apparatus (10) having a mixing vessel as claimed in Claim 8 or 9, wherein said channel means (88, 90) comprise a plurality of passage holes (88) provided in at least one protruding portion (89) which extends from the inner surface of the casing (40).

11. Apparatus (10) having a mixing vessel as claimed in Claim 8 or 9, wherein said channel means (88, 90) comprise a plurality of vanes (90) which extend from the inner surface of the casing (40).

12. Apparatus (10) having a mixing vessel as claimed in any one of Claims 1 to 11, wherein the discharge means (92, 94, 110) comprise a jacket (92) disposed between the casing (40) and the outer part (34) and immersed in said transport fluid (62), said jacket (92) being connected to an external source of cooling fluid which circulates in said jacket (92) and which discharges the heat from the transport fluid (62) through the wall of said jacket (92).

13. Apparatus (10) having a mixing vessel as claimed in any one of Claims 1 to 11, wherein the discharge means (92, 94, 110) comprise a coil (94) disposed between the casing (40) and the outer part (34) and immersed in said transport fluid (62), said coil (94) being connected to an external source of cooling fluid which circulates in said coil (94) and which discharges the heat from the transport fluid (62) through the wall of said coil (94).

14. Apparatus (10) having a mixing vessel as claimed in any one of Claims 1 to 11, wherein the discharge means (92, 94, 110) comprise a plurality of vanes (110) extending from the outer surface of the casing (40) and allowing heat exchange by convection with the ambient air.

## Patentansprüche

1. Gerät (10) mit Rührbottich der Art, die einen Rührbottich (12), der dazu bestimmt ist, eine Flüssigkeit zu enthalten, und einen Rührer (18) umfasst, der dazu bestimmt ist, sich axial in dem Rührbottich (12) zu drehen, wobei die Drehbewegung des Rührers (18) durch eine Antriebsumgebung ausgeführt wird, die eine drehbare Welle (22) umfasst, die durch eine Antriebsvorrichtung (30) angetrieben wird, wobei die Antriebsvorrichtung von der Art mit Flussverkettung ist,
wobei die Antriebsvorrichtung (30) im Innenraum eines Gehäuses (40) eingebaut ist und einen Innenabschnitt (32), der starr mit der drehbaren Welle (22) verbunden ist, und einen Außenabschnitt (34) umfasst, der starr mit einer Antriebswelle (26) verbunden ist, die das Gehäuse (40) durchquert, der Innenabschnitt (32) von dem Außenabschnitt (34) umgeben ist und der Innen-(32) und Außenabschnitt (34) jeweils mit Permanentmagneten (320, 340) versehen sind, die einander gegenüberstehend angeordnet sind und die Übertragung eines Antriebsdrehmoments (26) von der Antriebswelle (26) bis zur drehbaren Welle (22) ermöglichen, und
wobei eine Trennwand (50) zwischen dem Innenabschnitt (32) und dem Außenabschnitt (34) angeordnet ist,
wobei die Trennwand (50) mit dem Gehäuse (40) eine Aufnahme (60) für den Außenabschnitt (34) abgrenzt, wobei die Aufnahme (60) einen Innenraum (602), der sich zwischen dem Außenabschnitt (34) und der Trennwand (50) befindet, und einen Außenraum umfasst, der sich zwischen dem Außenabschnitt (34) und dem Gehäuse (40) befindet, und mit einer Transportflüssigkeit (62) zum Transportieren der Wärme gefüllt ist, wobei die Transportflüssigkeit (62) mit dem Außenabschnitt (34) in Berührung ist, ohne mit dem Innenabschnitt (32) und der drehbaren Welle (22) in Berührung zu sein,
wobei das Gerät ferner Umlaufmittel (82, 84, 86, 88, 90), um die Transportflüssigkeit (62) im Innenraum des Gehäuses (40) in Umlauf zu bringen, und Abfuhrmittel (92, 94, 100) zum Abführen der Wärme der Transportflüssigkeit (62) umfasst,
**dadurch gekennzeichnet, dass** die Umlaufmittel (82, 84, 86, 88, 90) mehrere Verbindungslöcher (82, 84, 86) umfassen, die den Außenabschnitt (34) derart durchqueren, dass die Wärme vom Innenraum (602) in Richtung des Außenraums (604) transportiert wird.

2. Gerät (10) mit Rührbottich nach Anspruch 1, wobei die Verbindungslöcher (82, 84, 86) über den Permanentmagneten (340) des Außenabschnitts (34) eingerichtet sind.

3. Gerät mit Rührbottich (10) nach Anspruch 1 oder 2, wobei die Verbindungslöcher (82) quer durch die Verbindung zwischen einem zylindrischen Körper (36) und einem Deckel (38) des Außenabschnitts (34) angeordnet sind.

4. Gerät (10) mit Rührbottich nach einem der Ansprüche 1 bis 3, wobei die Verbindungslöcher (84) quer durch einen zylindrischen Körper (36) des Außenabschnitts (34) angeordnet sind.

5. Gerät (10) mit Rührbottich nach einem der Ansprüche 1 bis 4, wobei die Verbindungslöcher (86) quer durch einen Deckel (38) des Außenabschnitts (34) angeordnet sind.

6. Gerät (10) mit Rührbottich nach einem der Ansprüche 1 bis 5, wobei die Verbindungslöcher (82, 84, 86) in Bezug zu einer horizontalen Ebene geneigt sind, wobei eines ihrer Enden auf der Innenseite des Außenabschnitts (34) mündet und ihr anderes Ende auf der Außenseite des Außenabschnitts (34) mündet.

7. Gerät (10) mit Rührbottich nach einem der Ansprüche 1 bis 6, wobei die Verbindungslöcher (82, 84, 86) in Bezug auf eine radiale Ebene des Außenabschnitts (34) geneigt sind.

8. Gerät (10) mit Rührbottich nach einem der Ansprüche 1 bis 7, wobei die Umlaufmittel (82, 84, 86, 88, 90) Kanalisierungsmittel (88, 90) zum Kanalisieren der Transportflüssigkeit (62) entlang einer axialen Richtung zwischen dem Gehäuse (40) und dem Außenabschnitt (34) umfassen.

9. Gerät (10) mit Rührbottich nach Anspruch 8, wobei die Kanalisierungsmittel (88, 90) in Richtung des unteren Teils der Aufnahme angeordnet sind.

10. Gerät (10) mit Rührbottich nach Anspruch 8 oder 9, wobei die Kanalisierungsmittel (88, 90) mehrere Durchgangslöcher (88) umfassen, die in mindestens einem vorspringenden Abschnitt (89) untergebracht sind, der sich von der Innenfläche des Gehäuses (40) ausgehend erstreckt.

11. Gerät (10) mit Rührbottich nach Anspruch 8 oder 9, wobei die Kanalisierungsmittel (88, 90) mehrere Flügel (90) umfassen, die sich von der Innenfläche des Gehäuses (40) ausgehend erstrecken.

12. Gerät (10) mit Rührbottich nach einem der Ansprüche 1 bis 11, wobei die Abfuhrmittel (92, 94, 110) einen Mantel (92) umfassen, der zwischen dem Gehäuse (40) und dem Außenabschnitt (34) angeordnet ist und in die Transportflüssigkeit (62) eingetaucht ist, wobei der Mantel (92) mit einer äußeren Quelle für eine Kühlflüssigkeit verbunden ist, die in dem Mantel (92) umläuft und die die Wärme der Transportflüssigkeit (62) durch die Wand des Mantels (92) abführt.

13. Gerät (10) mit Rührbottich nach einem der Ansprüche 1 bis 11, wobei die Abfuhrmittel (92, 94, 110) eine Rohrschlange (94) umfassen, die zwischen dem Gehäuse (40) und dem Außenabschnitt (34) angeordnet ist und in die Transportflüssigkeit (62) eingetaucht ist, wobei die Rohrschlange (94) mit einer äußeren Quelle für eine Kühlflüssigkeit verbunden ist, die in der Rohrschlange (94) umläuft und die die Wärme der Transportflüssigkeit (62) durch die Wand der Rohrschlange (94) abführt.

14. Gerät (10) mit Rührbottich nach einem der Ansprüche 1 bis 11, wobei die Abfuhrmittel (92, 94, 110) mehrere Flügel (110) umfassen, die sich ausgehend von der Außenfläche des Gehäuses (40) erstrecken und einen Wärmeaustausch durch Konvektion mit der Umluft ermöglichen.
